# EUROPÄISCHE PATENTSCHRIFT

(11) **EP 2 305 019 B1**
(45) Veröffentlichungstag und Bekanntmachung des Hinweises auf die Patenterteilung: **08.01.2014**
(21) Anmeldenummer: 10008211.4
(22) Anmeldetag: 06.08.2010
(51) Int. Cl.: A01B 69/00, A01D 78/10, B60D 1/173

(54) **Gezogene, angehängte oder aufgesattelte Landmaschine**
Pulled, suspended or saddled agricultural machine
Machine agricole tractée, remorquée ou attelée

(30) Priorität: 30.09.2009 DE 102009043592
(43) Veröffentlichungstag der Anmeldung: 06.04.2011
(73) Patentinhaber: CLAAS Saulgau GmbH, 88348 Bad Saulgau (DE)
(72) Erfinder: Speer, Christian, 88630 Pfullendorf (DE)

(56) Entgegenhaltungen:
- EP-A1- 0 316 896
- GB-A- 537 092
- GB-A- 2 023 392

## Beschreibung

Die Erfindung betrifft eine gezogenen, angehängte oder. aufgesattelte Landmaschine gemäß dem Oberbegriff des unabhängigen Anspruchs 1.

### Stand der Technik

Bekannt sind gezogene bzw. aufgesattelte Landmaschinen als angehängte Geräte für Zugfahrzeuge, wie beispielsweise Traktore. Dabei ist es wünschenswert und teilweise auch erforderlich, dass derartige Landmaschinen auch in Kurvenfahrten möglichst genau in der Spur des Zugfahrzeugs laufen. Dazu sind aufwendige Lenksteuerungen nach dem Prinzip der Achsschenkellenkung bekannt. Die EP 0316896 beschreibt eine derartige Landmaschine als eine aufgesattelte Heuwerbungsmaschine. Dabei sind die Laufräder an ihrem Fahrgestell um Hochachsen schwenkbar am Boden abgestützt und sind dabei mittels einer in Abhängigkeit von Ausrichtungsänderungen zwischen Zugdeichsel und Zugfahrzeug betätigbaren Lenkvorrichtung lenkbar. Es handelt sich hierbei um eine aufwändige Konstruktion, da gerade bei großen und langen Landmaschinen dieser Art der technische Aufwand erheblich ist.

### Aufgabenstellung

Hier setzt die Aufgabe der Erfindung an mit dem Ziel, ein kostengünstiges Äquivalent zu einer Lenksteuerung für eine gezogene und/oder aufgesattelte Landmaschine zu schaffen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den

Figurendarstellungen zu entnehmen.

Die Erfindung löst die Aufgabe durch eine selbsttätig wirkende Steuereinrichtung, bestehend aus einem Lenkerkoppelgetriebe, welches zwischen der Anschlussvorrichtung zur Koppelung an ein Zugfahrzeug und der Hochachse eines als Gelenk ausgebildeten Zugpunkts zwischengeschaltet ist, und welches zugleich die Zugkraft des Zugfahrzeugs auf die gezogene und/oder aufgesattelte Landmaschine überträgt.

Dadurch, dass das Lenkerkoppelgetriebe so ausgebildet ist, dass sich der Zugpunkt während der Kurvenfahrt quer zur Fahrtrichtung selbsttätig verlagert, passt sich das an sich ungelenkte Fahrwerk dem momentanen Kurvenradius derart an, dass die Laufräder des Fahrwerks auf einem engeren Kurvenradius laufen, als das ohne das Lenkerkoppelgetriebe der Fall wäre. Dieses beinhaltet den Vorteil, dass die dem Zugfahrzeug folgende und nachlaufende Landmaschine in der Kurvenfahrt keine von den Bearbeitungswerkzeugen nicht erfassten und damit unbearbeiteten Flächen als sogenannte gekrümmte Streifen (Bananen) hinterlässt. Dieses tritt ggf. in Verbindung mit Großflächenmähwerken, oder Großflächenschwadern, die mehrere neben- und hintereinander beabstandete Werkzeugeinheiten, wie Mäheinheiten oder Rechkreiseleinheiten, aufweisen. Anhand des nachfolgend dargelegten Ausführungsbeispiels wird die Erfindung exemplarisch näher erläutert.

Es zeigen:
- Fig.1: Ein Gespann gemäß der Erfindung in einer Draufsicht auf die Arbeitsebenen in Geradeausfahrt (gestreckter Zug bzw. gestrecktes Gespann)
- Fig.2: Ein Gespann gemäß Fig. 1 in einer Seitenansicht
- Fig.3: Ein Lenkerkoppelgetriebe nach der Erfindung gemäß Fig.1 in einer vergrößerten perspektivischen Ansicht

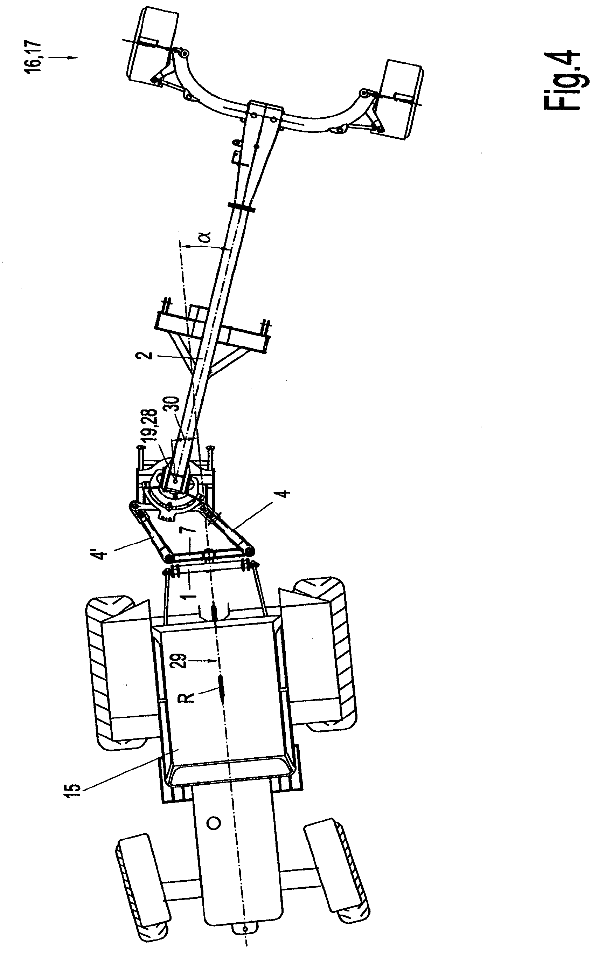

- Fig.4: Ein Gespann gemäß Fig. 1 in einer Kurvenfahrt

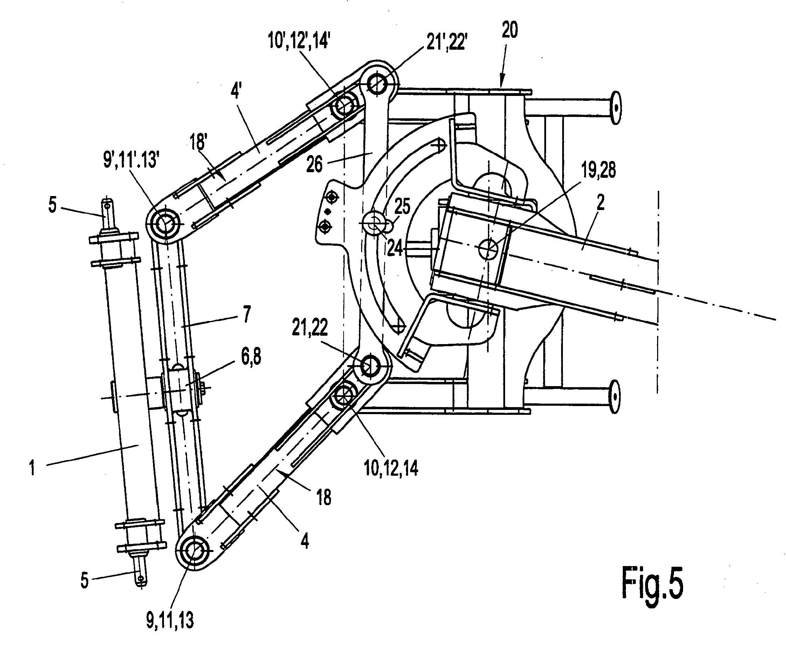

- Fig.5: Ein Lenkerkoppelgetriebe nach der Erfindung gemäß Fig.4 in einer vergrößerten Ansicht

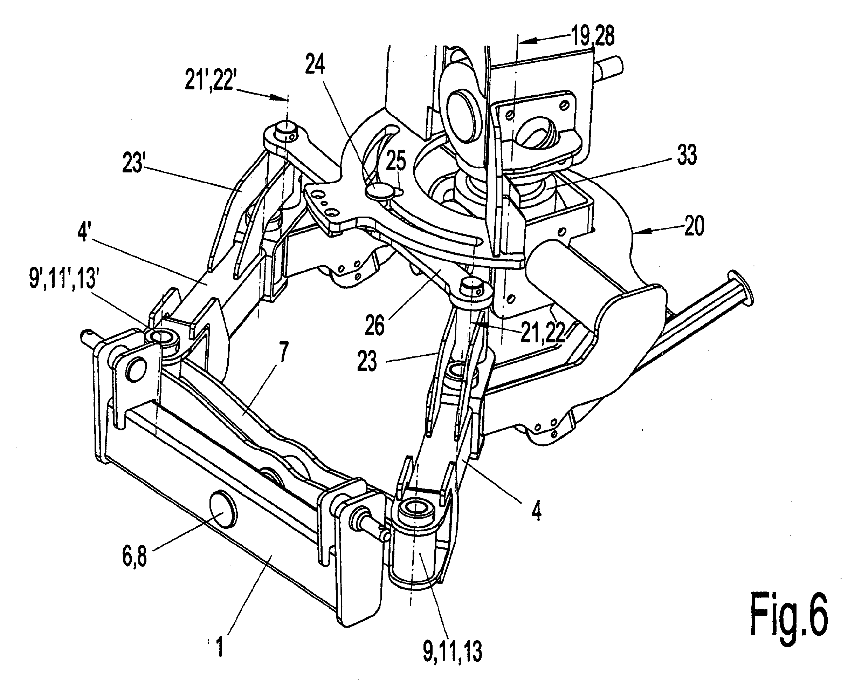

- Fig.6: Ein Lenkerkoppelgetriebe nach der Erfindung gemäß Fig.4 bzw. Fig.5 in einer vergrößerten und perspektivischen Ansicht

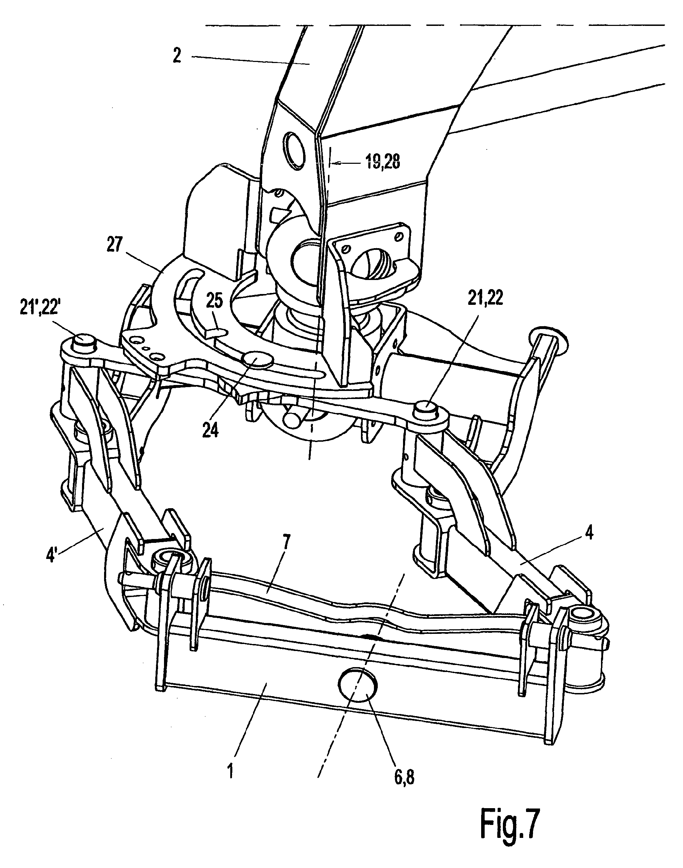

- Fig.7: Ein Lenkerkoppelgetriebe nach der Erfindung gemäß Fig.6 aus einer anderen Perspektive und entgegen der Fahrtrichtung gesehen
- Fig.8: ein weiters Ausführungsbeispiel einer Landmaschine nach der Erfindung am Beispiel eines gezogenen Mähwerks.

Eine Landmaschine nach der Erfindung ist ausgebildet als gezogenes bzw. aufgesatteltes Gerät im Sinne einer auswechselbaren Ausrüstung zum Anschluss bzw. zur Ankoppelung an ein Zugfahrzeug 15, welches ein Gespann ergibt.

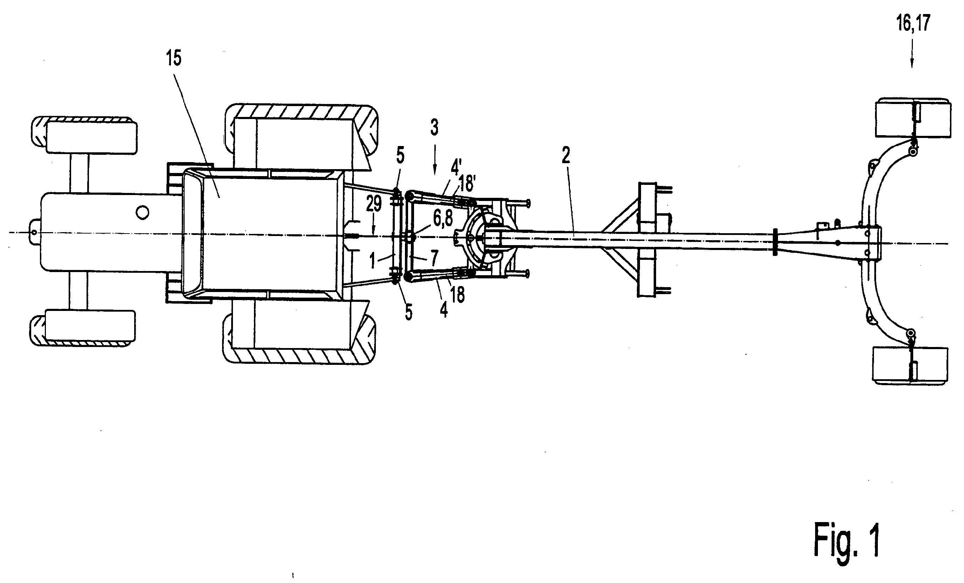

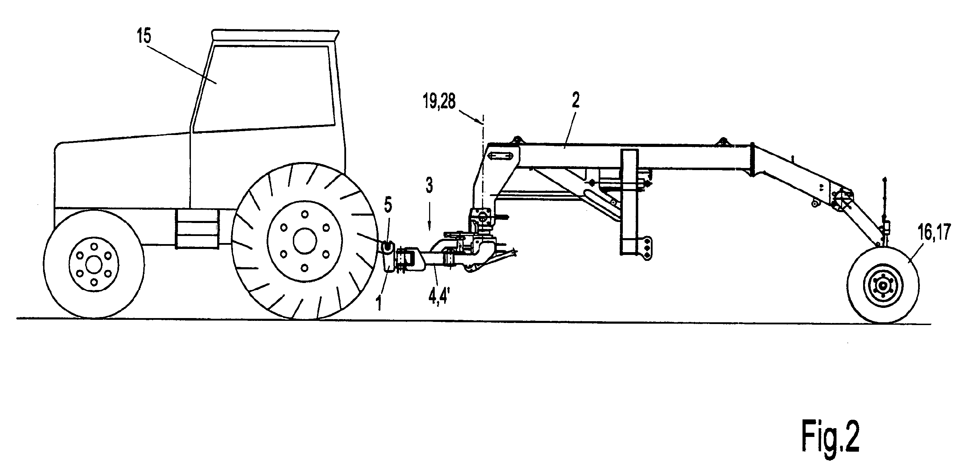

Dieses aufgesattelte Gerät ist mit einer Anschlussvorrichtung 1 zur Ankoppelung an das Zugfahrzeug 15 ausgestattet und es weist zugleich ein Fahrgestell 2 mit einem Fahrwerk 16 mit Laufrädern 17 auf. Das in der Fig. 1 und Fig.2 dargestellte Gerät ist dem Wesen nach noch ein unbestimmtes Gerät, d.h. es kann Werkzeuge aufnehmen, mit denen es die dafür vorgesehenen Arbeiten in der Landwirtschaft ausführen kann. Derartige Werkzeuge können beispielsweise Mäheinheiten oder auch Rechkreisel sein, so dass das Gerät erst durch die Aufrüstung mit derartigen Werkzeugen zu einer Maschine wird.

Zur Ankoppelung an ein Zugfahrzeug weist die Anschlussvorrichtung 1 Unterlenkeranschlusspunkte 5 auf, so dass es sich bei der Landmaschine zugleich um ein gezogenes und aufgesatteltes landwirtschaftliches Gerät im Sinne einer auswechselbaren Ausrüstung handelt.

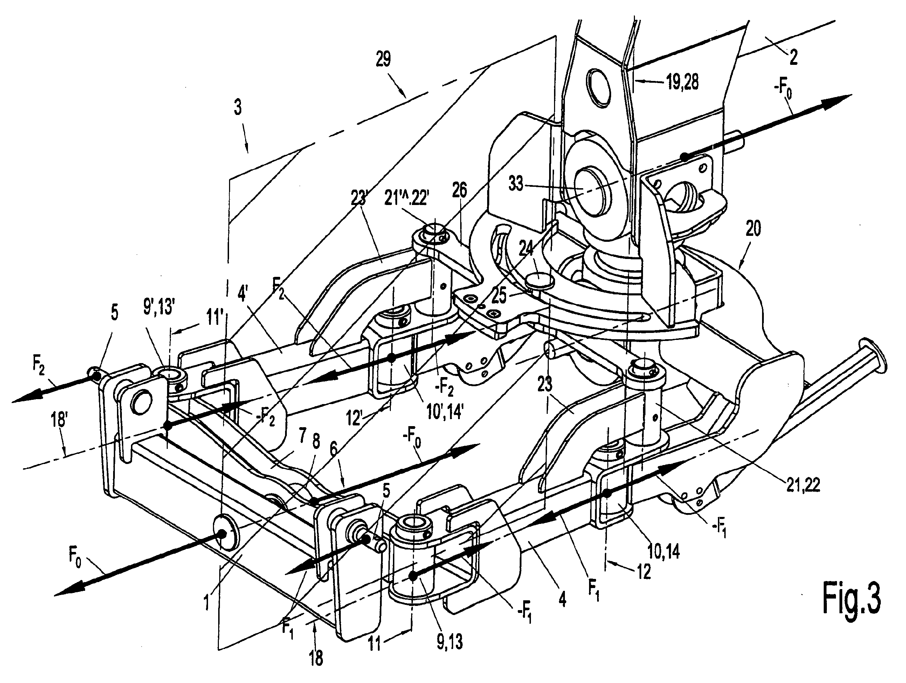

In der Geradeausfahrt des Gespanns, bestehend aus Zugfahrzeug 1 und angehängter bzw. aufgesattelter Landmaschine, befindet sich das Gespann in der sogenannten gestreckten Länge. Diese ist in der Fig. 1 in einer Draufsicht dargestellt. Fig. 2 zeigt die gleiche Anordnung des gestreckten Gespanns in einer Seitenansicht. Fig.3 zeigt in einer perspektivischen Darstellung einen Auszug aus Fig.1 bzw. Fig.2, und zwar insbesondere in einer vergrößerten Darstellung das Viergelenkkoppelgetriebe 3, welches die Zugkraft (F₀) auf das Fahrgestell überträgt.

Dabei weist die Landmaschine ein Fahrgestell 2 mit einem Fahrwerk 16 mit wenigstens zwei Laufrädern 17 auf. Um die Nachlaufeigenschaften in der Kurvenfahrt zu gewährleisten, ist das Fahrgestell 2 im Zugpunkt 19 um eine Hochachse 28 verschwenkbar mit dem Viergelenkkoppelgetriebe 3 aufgesattelt auf einem Sattelträger 20 verbunden.

Zwischen der Anschlussvorrichtung 1 zur Ankoppelung an die Unterlenker eines Zugfahrzeugs und dem Fahrgestell 2 befindet sich ein Viergelenkkoppelgetriebe 3 mit den Gelenkpunkten 13,14,13',14', welches die Zugkraft F₀ des Zugfahrzeugs 15 über zwei divergierend zueinender verlaufenden Lenkerkoppeln (4,4') auf das Fahrgestell 2 überträgt. Somit spaltet sich die Zugkraft F₀ in zwei Kraftkomponenten F₁ und F₂ auf, so dass die Wirkungslinien 18,18' der Zugkräfte F₁,F₂ der Lenkerkoppeln 4,4' in jeder Betriebsstellung der Landmaschine divergierend zueinander verlaufen.

Die Anschlussvorrichtung 1 ist mit einer Lagerstelle 8, ausgebildet als Axiallager mit einer Horizontalachse 6 zur Aufnahme einer Schwinge 7 verbunden. Die Schwinge 7 weist endseitig Lagerstellen 9,9' mit Hochachsen 11.11' zum Anschlag der Vertikalgelenke (13,13') der Lenkerkoppeln 4,4' auf. Die Lenkerkoppeln 4,4' weisen beidendseitig Lagerstellen 9,9',10,10' mit Hochachsen 11,11',12,12' auf, die Bestandteil des Viergelenkkoppelgetriebes 3 sind und die zur Bildung der Vertikalgelenke 13,13',14,14' dienen.

Die Lagerstellen 10,10' und damit die Vertikalgelenke 14,14' sind Bestandteil des Sattelträgers 20, welcher ebenfalls eine Koppel des Viergelenkkoppelgetriebes 3 darstellt.

Die Lenkerkoppeln 4,4' weisen an ihren Enden, dem Sattelträger 20 zugewandt, Kragarme 23,23' auf, die wiederum endseitig Gelenkpunkte 21,21', ausgebildet als Vertikallager mit den Hochachsen 22,22', aufweisen. Die Kragarme 23,23' sind fester Bestandteil der Lenkerkoppeln 4,4', wobei diese zugleich die Gelenkpunkte 14,14' übergreifen. Die Gelenkpunkte 21,21' nehmen eine Verriegelungskoppelstange 26 auf, die wiederum auf halber Länge einen Verriegelungsstehbolzen 24 aufnimmt, der lotrecht zur Verriegelungskoppelstange 26 mit dieser verschweißt aufwärts zeigt und der in einen Verriegelungsschlitz 25 eingreift. Der Verriegelungsschlitz 25 ist Teil der Segmentplatte 27, welche fest mit dem Fahrgestell 2 verbunden ist. Sofern der Verriegelungsbolzen 24 in den Verriegelungsschlitz 25 der Segmentplatte 27 eingreift, kann das Fahrgestell 2 keine Dreh- bzw. Schwenkbewegung als Nachlaufbewegung um die Hochachse 28 des Zugpunkts 19 ausführen, wohl hingegen aber aufgrund der Kinematik des Viergelenkkoppelgetriebes 3 um eine imaginäre Hochachse eines nicht näher dargestellten Drehpols, der sich aus der momentan ergebenden Ausrichtung der Lenkerkoppeln 4,4' zueinander während der eingeleiteten Kurvenfahrt ergibt. Dabei ist es von ausschlaggebender Bedeutung, dass die Lenkerkoppeln 4,4' kein Parallelogramm ergeben, sondern in jeder Lage ihrer Betriebsstellung einen wenngleich sich verändernden divergierenden Verlauf zueinander einnehmen.

In der gestreckten Lage des Gespanns ist das Viergelenkkoppelgetriebe 3 spiegelsymmetrisch zur vertikalen Längsmittelebene 29 der Anschlussvorrichtung 1 ausgebildet, welche durch die Horizontalachse 6 der Lagerstelle 8 verläuft. Diese Stellung der Lenkerkoppeln 4,4' zueinander ist in Fig. 1 und Fig.3 dargestellt. Die Zugkräfte F₁,-F₁, F₂,-F₂ als Aktions-. bzw. Reaktionskräfte, die auf die Gelenkpunkte 13,13',14,14' der Lenkerkoppeln 4,4' einwirken, addieren sich vektoriell zur resultierenden Zugkraft F₀, ausgehend vom Zugfahrzeug 15, auf und diese greift als Zugkraft -F₀ an das Fahrgestell 2 im Zugpunkt 19 an.

Bei Einleitung einer Kurvenfahrt verändert sich die Stellung der Lenkerkoppeln 4,4' dahingehend, dass diese nunmehr nicht mehr spiegelsymmetrisch zur Längsmittelebene 29 verlaufen, mit der Folge, dass der Zugpunkt 19 einen Querversatz 30 in Bezug auf die Längsmittelebenen erfährt, so dass sich dadurch der Einschlagwinkel α des nachlaufenden Fahrgestells 2 in Bezug auf die vertikale Längsmittelebene 29 und damit in Bezug auf das Zugfahrzeug vergrößert gegenüber dem Zustand ohne den Querversatz 30. Im Ergebnis bedeutet dieses, dass das Fahrwerk 16 und damit die Laufräder 17 in einer Spur mit kleinerem Kurvenradius laufen, als dieses ohne den Querversatz 30 der Fall wäre. Dieses kommt in seiner Wirkung einem gelenkten Fahrwerk, beispielsweise mit einer aufwendigen Achsschenkellenkung, gleich. Der sich einstellende Querversatz 30 ist dabei abhängig vom momentanen Kurvenradius des Zugfahrzeugs (1).

Die weitere Ausgestaltung der Erfindung sieht vor, dass bei sehr engen Kurvenradien des Zugfahrzeugs 15 der Verriegelungsbolzen 24 aus dem Verriegelungsschlitz 25 selbsttätig austritt, so dass seine Mitnahmewirkung aufgehoben ist und sich der Verriegelungsbolzen 24 innerhalb der gekrümmten Kulisse widerstandslos bewegen kann. Dieses wird dadurch bewirkt, dass durch die Ausrichtungs- und Lageveränderung der Lenkerkoppeln 4,4' in Kurvenfahrten die Verriegelungskoppel 26 ebenfalls eine Ausrichtungs- und Lageveränderung derart erfährt, dass sich diese vom Zugpunkt in Fahrtrichtung R und damit in Richtung des Zugfahrzeugs bewegt, wodurch sich der Stehbolzen als Verriegelungsbolzen 24 aus dem Verriegelungsschlitz 25 herausbewegt. Infolge dessen kann sich nunmehr das Fahrgestell 2 um die Hochachse 28 des Zugpunkts 19 freibeweglich verschwenken, ohne dass es zu Zwängungen und ggf. zu Überlastungen an dem Verriegelungsbolzen 24 kommt. Somit weist der Zugpunkt 19 eine Überlastsicherung mit einer sich selbsttätig zuschaltenden Freigangeinrichtung auf.

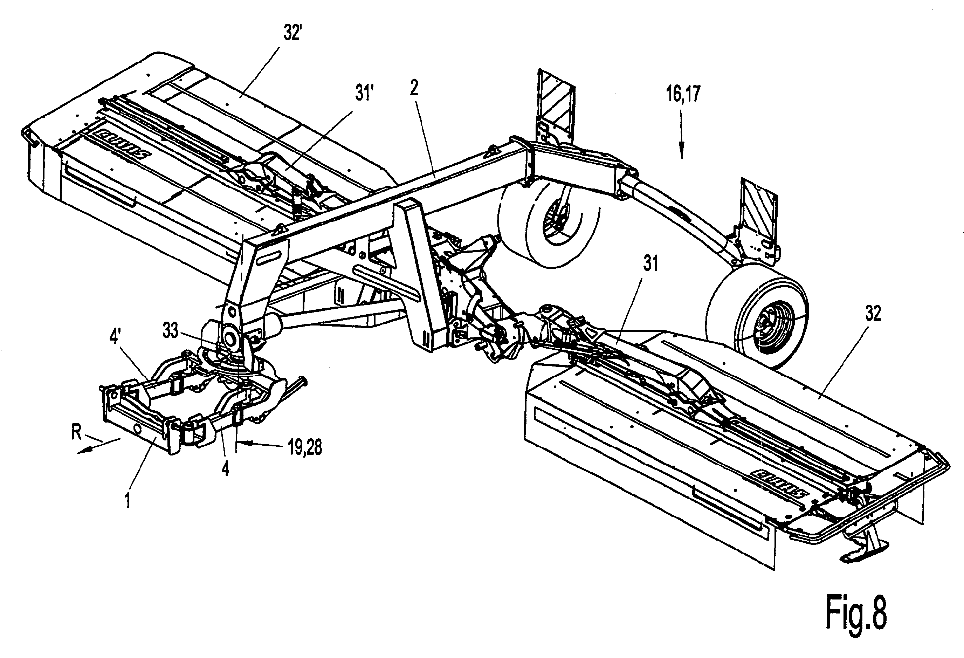

Fig.8 zeigt ein vervollständigtes bzw. komplettiertes Ausführungsbeispiel einer Landmaschine nach der Erfindung am Beispiel eines gezogenen Mähwerks. Das Fahrgestell 2 mit seinem Fahrwerk 16 und seinen Laufrädern 17 wird in Fahrtrichtung R bewegt und weist das erfindungsgemäße Lenkerkoppelgetriebe 3, ausgeführt als Viergelenkkoppelgetriebe 3, auf. Das Fahrgestell 2 nimmt die Ausleger 31,31' in an sich bekannter weise auf, die beidseitig zur vertikalen Längsmittelebene 29 angeordnet sind und die Ausleger 31,31' ihrerseits nehmen die Mäheinheiten 32,32' auf. Der Zugpunkt 19 mit seiner Schwenk- bzw. Hochachse 28 ist in dem Ausführungsbeispiel als ein dem Fachmann bekanntes Schwenkgetriebe 33 ausgebildet, welches antriebsseitig mit der Zapfwelle (PTO) des Zugfahrzeugs 15 in Verbindung steht.

Der Fachmann erkennt sofort, dass die Mäheinheiten 32,32' ohne weiteres ersetzt werden können durch andere Werkzeugeinheiten, beispielsweise durch Rechkreiseleinheiten, so dass die Erfindung auch auf andere gezogene Landmaschinen vergleichbarer Art übertragen werden kann.

### Bezugszeichenliste

- 1: Anschlussvorrichtung
- 2: Fahrgestell
- 3: Lenkerkoppelgetriebe, Viergelenkkoppelgetriebe
- 4,4': Lenkerkoppeln
- 5: Unterlenkeranschlusspunkt
- 6: Horizontalachse
- 7: Schwinge
- 8: Lagerstelle, Halterung
- 9,9': Lagerstelle
- 10,10': Lagerstelle
- 11,11': Hochachse
- 12,12': Hochachse
- 13,13': Gelenkpunkt, Vertikalgelenk
- 14,14': Gelenkpunkt, Vertikalgelenk
- 15: Zugfahrzeug
- 16: Fahrwerk
- 17: Laufräder
- 18,18': Wirkungslinie
- 19: Zugpunkt
- 20: Sattelträger
- 21,21': Gelenkpunkt, Vertikalgelenke
- 22,22': Hochachse
- 23,23': Kragarm
- 24: Verriegelungsstehbolzen
- 25: Verriegelungsschlitz
- 26: Verriegelungskoppelstange
- 27: Segmentplatte
- 28: Schwenkachse, Hochachse
- 29: vertikale Längsmittelebene
- 30: Querversatz
- 31,31': Ausleger
- 32,32': Mäheinheiten
- 33: Schwenkgetriebe

- F₀, -F₀: Zugkraft
- F₁, -F₁: Zugkraft
- F₂, -F₂: Zugkraft
- R: Fahrtrichtung
- α: Einschlagwinkel

## Patentansprüche

1. Landmaschine, ausgebildet als gezogenes Gerät, zum Anschluss an ein Zugfahrzeug (15) mit einem Fahrgestell (2) und einer Anschlussvorrichtung (1) zur Ankoppelung an ein Zugfahrzeug (15), wobei das Fahrgestell (2) ein Fahrwerk (16) mit wenigstens zwei Laufrädern (17) aufweist und mit einer Steuereinrichtung zur Lenkung des Fahrgestells, **dadurch gekennzeichnet, dass** die Steuereinrichtung aus einem Lenkerkoppelgetriebe (3) besteht, welches zwischen der Anschlussvorrichtung (1) zur Koppelung an ein Zugfahrzeug (15) und der Hochachse (28) eines als Gelenk ausgebildeten Zugpunkts (19) zwischengeschaltet ist, und welches zugleich die Zugkraft (F₀) des Zugfahrzeugs (15) auf die gezogene und/oder aufgesattelte Landmaschine überträgt.

2. Landmaschine nach Anspruch 1, **dadurch gekennzeichnet, dass** die Anschlussvorrichtung (1) und das Fahrgestell (2) über ein Viergelenkkoppelgetriebe (3) mit Vertikalgelenken (13,14,13',14') und die Zugkraft (F₀) übertragenden Lenkerkoppeln (4,4') derart miteinander verbunden sind, dass die Wirkungslinien (18,18') der Zugkräfte (F₁,F₂) der Lenkerkoppeln (4,4'), in jeder Betriebsstellung divergierend zueinander verlaufen.

3. Landmaschine nach Anspruch 2, **dadurch gekennzeichnet, dass** das Viergelenkkoppelgetriebe (3) zwei, im wesentlichen in Fahrtrichtung weisende und divergierend zueinander verlaufende, Zugkräfte (F₁, F₂) übertragende Lenkerkoppeln (4,4') aufweist, die endseitig mit einem einen quer zur Fahrtrichtung (R) verlaufenden Sattelträger (20) aufnehmenden Zugpunkt (19) verbunden sind.

4. Landmaschine nach Anspruch 1, **dadurch gekennzeichnet, dass** die Anschlussvorrichtung (1) Unterlenkeranschlusspunkte (5) aufweist.

5. Landmaschine nach Anspruch 1, **dadurch gekennzeichnet, dass** die Anschlussvorrichtung (1) eine Halterung (8), ausgebildet als Axiallager mit einer Horizontalachse (6), zur Aufnahme einer Schwinge (7) aufweist.

6. Landmaschine nach Anspruch 5, **dadurch gekennzeichnet, dass** die Schwinge (7) endseitig Lagerstellen (9,9') mit Hochachsen (11.11') zum Anschlag der Vertikalgelenke (13,13') aufweist.

7. Landmaschine nach Anspruch 2, **dadurch gekennzeichnet, dass** die Lenkerkoppeln (4,4') beidendseitig Lagerstellen (9,9',10,10') mit Hochachsen (11,11',12,12') zur Bildung der Vertikalgelenke (13,13',14,14') aufweisen.

8. Landmaschine nach Anspruch 1, **dadurch gekennzeichnet, dass** durch Verlassen der Geradesausfahrt und der damit einhergehenden gestreckten Lage des Gespanns, infolge der Zwangskopplung mit dem Lenkerkoppelgetriebe (3) selbsttätig ein Querversatz (30) zwischen einer vertikalen Längsmittelebene (29) und dem Zugpunkt (19) des Fahrgestells(2) erzeugt wird.

9. Landmaschine nach Anspruch 8, **dadurch gekennzeichnet, dass** der Querversatz (30) abhängig ist vom momentanen Kurvenradius des Zugfahrzeugs (1)

10. Landmaschine nach Anspruch 1, **dadurch gekennzeichnet, dass** der Zugpunkt (19) eine Überlastsicherung mit einer sich selbsttätig zuschaltenden Freigangeinrichtung aufweist.

11. Landmaschine nach Anspruch 1, **dadurch gekennzeichnet, dass** der Zugpunkt (19) als Schwenkgetriebe (33) ausgebildet ist.

## Claims

1. An agricultural machine in the form of a towed apparatus for connection to a towing vehicle (15) having a chassis (2) and a connecting device (1) for coupling to a towing vehicle (15), wherein the chassis (2) has a running gear (16) with at least two wheels (17), and a control device for steering the chassis, **characterised in that** the control device comprises a steering coupling transmission (3) which is interposed between the connecting device (1) for coupling to a towing vehicle (15) and the vertical axis (28) of a towing point (19) in the form of a joint and which at the same time transmits the towing force (F₀) of the towing vehicle (15) to the towed and/or semi-trailer coupled agricultural machine.

2. An agricultural machine according to claim 1 **characterised in that** the connecting device (1) and the chassis (2) are connected together by way of a four-joint coupling transmission (3) with vertical joints (13, 14, 13', 14') and steering coupling members (4, 4') transmitting the towing force (F₀) in such a way that the lines of action (18, 18') of the towing forces (F₁, F₂) of the steering coupling members (4, 4') extend in mutually divergent relationship in any operative position.

3. An agricultural machine according to claim 2 **characterised in that** the four-joint coupling transmission (23 has two steering coupling members (4, 4') which face substantially in the direction of travel and extend in mutually divergent relationship and transmit towing forces (F₁, F₂) and which are connected at the end to a towing point (19) receiving a semi-trailer coupling carrier (20) extending transversely relative to the direction of travel (R).

4. An agricultural machine according to claim 1 **characterised in that** the connecting device (1) has lower steering connecting points (5).

5. An agricultural machine according to claim 1 **characterised in that** the connecting device (1) has a holder (8) in the form of an axial mounting with a horizontal axis (6) for receiving a swing arm (7).

6. An agricultural machine according to claim 5 **characterised in that** at its ends the swing arm (7) has mounting locations (9, 9') with vertical axes (11, 11') for the fitment of the vertical joints (13, 13').

7. An agricultural machine according to claim 2 **characterised in that** the steering coupling members (4, 4') at both ends have mounting locations (9, 9', 10, 10') with vertical axes (11, 11', 12, 12') for forming the vertical joints (13, 13', 14, 14').

8. An agricultural machine according to claim 1 **characterised in that** due to departing from straight-ahead travel and the straight position that this entails of the vehicle combination, as a consequence of positive coupling with the steering coupling transmission (3) a transverse displacement (30) is automatically produced between a vertical longitudinal central plane (29) and the towing point (19) of the chassis (2).

9. An agricultural machine according to claim 8 **characterised in that** the transverse displacement (30) is dependent on the instantaneous radius of the curve of the towing vehicle (1).

10. An agricultural machine according to claim 1 **characterised in that** the towing point (19) has an overload prevention means with a release device which automatically cuts in.

11. An agricultural machine according to claim 1 **characterised in that** the towing point (19) is in the form of a pivotal transmission (33).

## Revendications

1. Machine agricole, réalisée sous la forme d'un outil tracté, destinée à être raccordée à un véhicule tracteur (15), comportant un châssis (2) et un dispositif de raccordement (1) pour le couplage à un véhicule tracteur (15), le châssis (2) présentant un train de roulement (16) doté d'au moins deux roues (17) et comportant un dispositif de commande pour le guidage du châssis, **caractérisée en ce que** le dispositif de commande se compose d'un mécanisme à bielles articulées (3) qui est intercalé entre le dispositif de raccordement (1) pour le couplage à un véhicule tracteur (15) et l'axe vertical (28) d'un point de traction (19) réalisé sous la forme d'une articulation et qui transmet en même temps la force de traction (F₀) du véhicule tracteur (15) à la machine agricole tractée et/ou attelée.

2. Machine agricole selon la revendication 1, **caractérisée en ce que** le dispositif de raccordement (1) et le châssis (2) sont reliés ensemble par un mécanisme à bielles à quadruple articulation (3), avec des articulations verticales (13, 14, 13', 14') et des bielles articulées (4, 4') transmettant la force de traction (F₀), de façon que, dans toute position de fonctionnement, les lignes d'action (18, 18') des forces de traction (F₁, F₂) des bielles articulées (4, 4') s'étendent de manière divergente l'une par rapport à l'autre.

3. Machine agricole selon la revendication 2, **caractérisée en ce que** le mécanisme à bielles à quadruple articulation (3) présente deux bielles articulées (4, 4') qui s'étendent sensiblement dans la direction de marche et de manière divergente l'une par rapport à l'autre, qui transmettent des forces de traction (F₁, F₂) et qui, à une extrémité, sont reliées à un point de traction (19) recevant un porte-sellette (20), lequel s'étend transversalement à la direction de marche (R).

4. Machine agricole selon la revendication 1, **caractérisée en ce que** le dispositif de raccordement (1) présente des points de raccordement de bras inférieurs (5).

5. Machine agricole selon la revendication 1, **caractérisée en ce que** le dispositif de raccordement (1) présente un support (8) réalisé sous la forme d'un palier axial avec un axe horizontal (6) et destiné à recevoir une bielle oscillante (7).

6. Machine agricole selon la revendication 5, **caractérisée en ce que**, à ses extrémités, la bielle oscillante (7) présente des points d'appui (9, 9') avec des axes verticaux (11, 11') pour l'ancrage des articulations verticales (13, 13').

7. Machine agricole selon la revendication 2, **caractérisée en ce que**, à leurs deux extrémités, les bielles articulées (4, 4') présentent des points d'appui (9, 9', 10, 10') avec des axes verticaux (11, 11', 12, 12') pour former les articulations verticales (13, 13', 14, 14').

8. Machine agricole selon la revendication 1, **caractérisée en ce que**, en quittant la marche en ligne droite et la position étirée correspondante de l'attelage, il se produit automatiquement, du fait du couplage forcé avec le mécanisme à bielles articulées (3), un décalage transversal (30) entre un plan médian longitudinal vertical (29) et le point de traction (19) du châssis (2).

9. Machine agricole selon la revendication 8, **caractérisée en ce que** le décalage transversal (30) dépend du rayon de virage momentané du véhicule tracteur (1).

10. Machine agricole selon la revendication 1, **caractérisée en ce que** le point de traction (19) présente une sécurité de surcharge avec un dispositif à course libre s'activant de lui-même.

11. Machine agricole selon la revendication 1, **caractérisée en ce que** le point de traction (19) est réalisé sous la forme d'un mécanisme pivotant (33).
